# EUROPÄISCHE PATENTSCHRIFT

(11) **EP 2 810 026 B1**
(45) Veröffentlichungstag und Bekanntmachung des Hinweises auf die Patenterteilung: **17.06.2020**
(21) Anmeldenummer: 12813797.3
(22) Anmeldetag: 17.12.2012
(51) Int. Cl.: G01F 23/296, G01N 9/00, G01N 11/16

(54) **VORRICHTUNG ZUR BESTIMMUNG UND/ODER ÜBERWACHUNG EINER PROZESSGRÖSSE**
APPARATUS FOR DETERMINING AND/OR MONITORING A PROCESS VARIABLE
DISPOSITIF POUR DÉTERMINER ET/OU SURVEILLER UNE VARIABLE DE PROCESSUS

(30) Priorität: 30.01.2012 DE 102012100728
(43) Veröffentlichungstag der Anmeldung: 10.12.2014
(73) Patentinhaber: Endress+Hauser SE+Co. KG, 79689 Maulburg (DE)
(72) Erfinder: DREYER, Volker, 79541 Lörrach (DE); LOPATIN, Sergej, 79540 Lörrach (DE); MACK, Benjamin, 79540 Lörrach (DE); MÜLLER, Alexander, 79361 Sasbach-Jechtingen (DE); PFEIFFER, Helmut, 79585 Steinen (DE)
(74) Vertreter: Andres, Angelika Maria
(86) Internationale Anmeldenummer: PCT/EP2012/075781
(87) Internationale Veröffentlichungsnummer: WO 2013/113446

(56) Entgegenhaltungen:
- EP-A1- 0 070 334
- EP-A1- 0 070 334
- DE-T3- 3 878 473
- GB-A- 1 581 291
- US-A- 5 670 709
- US-A- 5 670 709
- US-A- 6 044 694
- US-A1- 2007 028 691
- US-A1- 2009 145 656

## Beschreibung

Die vorliegende Erfindung betrifft eine Vorrichtung zur Bestimmung und/oder Überwachung mindestens einer Prozessgröße eines Mediums in einem Behälter, mit einer schwingfähigen Einheit zum Einbringen in den Behälter, mit einem Gehäuse, wobei die schwingfähige Einheit derart mit dem Gehäuse verbunden ist, dass die schwingfähige Einheit das Gehäuse endseitig verschließt, und wobei in die schwingfähige Einheit mindestens ein Hohlraum eingebracht ist, welcher von einem durch das Gehäuse gebildeten Innenraum her zugänglich ist, mit einer Antriebs-/Empfangseinheit zum Anregen der schwingfähigen Einheit zu mechanischen Schwingungen und zum Empfangen der mechanischen Schwingungen und Umwandeln in ein elektrisches Empfangssignal, und mit einer Regel-/Auswerteeinheit zur Regelung oder Steuerung der Schwingungsanregung und zur Auswertung des Empfangssignals in Bezug auf die Prozessgröße. Bei der Prozessgröße handelt es sich beispielsweise um den Füllstand eines Schüttguts oder einer Flüssigkeit und/oder um die Dichte und/oder die Viskosität eines flüssigen oder gasförmigen Mediums.

Zur Füllstandsmessung, insbesondere zur Grenzstanderfassung, kommen häufig vibronische Messgeräte mit einer zu mechanischen Schwingungen anregbaren schwingfähigen Einheit zum Einsatz. Die schwingfähige Einheit ist bei Anwendungen in Flüssigkeiten in der Regel als so genannte Schwinggabel mit zwei an einer Membran befestigten Stäben ausgestaltet, währen für Schüttgüter sowohl Schwinggabeln als auch Einstäbe mit nur einem Stab als Resonator eingesetzt werden. Zur Schwingungsanregung dienen meist piezoelektrische oder magnetoelektrische Antriebe, welche die schwingfähige Einheit auf ihrer Resonanzfrequenz anregen. Der piezoelektrische Antrieb ist bei Schwinggabeln auf der Membranrückseite angebracht. Die Membran ist hierbei ziemlich dünn, damit eine gute Schwingenergieübertragung zwischen dem Resonator und dem Antrieb stattfindet. Üblicherweise ist die Membran etwa 1 bis 2 mm dick und ihr Durchmesser entspricht ½ Zoll bis 1,5 Zoll. Die Standfestigkeit von solchen Membranen ist bei hohem Prozessdruck eingeschränkt und liegt typischerweise unter 10 MPa.

In der Patentschrift DE 3878473 T3 ist eine Lösung für einen Antrieb beschrieben, wobei die Schwinggabel mit zwei direkt in den Zinken angeordneten piezoelektrischen Elementen angetrieben wird. Jeweils ein als Antriebselement verwendetes und ein als Empfangselement verwendetes piezoelektrisches Element sind an einer Wandung eines Hohlraums in dem Zinken angebracht. Hierdurch werden die Kräfte, die der Piezoantrieb liefert, nicht über eine Membran übertragen, sondern direkt in einem Wurzelbereich der Zinken ausgeübt. In diesem Fall spielt die Membran eine untergeordnete Rolle im Schwingsystem des Sensors und kann beliebig dick sein. Dies hilft, die Druckstandfestigkeit des Sensors deutlich zu verbessern. Die Anbringung der piezoelektrischen Antriebs- und Empfangselemente ist hierbei jedoch relativ schwierig durchzuführen, da die piezoelektrischen Elemente auf die Wandung aufgeklebt und genau positioniert werden müssen. Die genaue Positionierung der Piezoelemente spielt eine wichtige Rolle, da der Piezoantrieb eine Biegedeformation im Übergangsbereich zwischen Zinken und Membran erzeugen muss. Zudem ist ein derartiger Antrieb nur bei metallischen Schwinggabeln effizient.

US 5 670 709 A und US 2007/028691 A1 offenbaren einen Einstab mit einem innerem Schwinger.

US 6 044 694 A offenbart einen Biegeschwinger mit einem bimorphen piezoelektrischen Element, das in ein Vergusselement eingebettet ist.

Die Aufgabe der Erfindung besteht darin, eine Vorrichtung eingangs genannter Art bereitzustellen, deren Antrieb unabhängig vom Material der schwingfähigen Einheit eine hohe Effizienz besitzt.

Die Aufgabe wird durch eine Vorrichtung zur Bestimmung und/oder Überwachung mindestens einer Prozessgröße eines Mediums in einem Behälter gemäß Anspruch 1 gelöst, mit einer schwingfähigen Einheit zum Einbringen in den Behälter, mit einem Gehäuse, wobei die schwingfähige Einheit derart mit dem Gehäuse verbunden ist, dass die schwingfähige Einheit das Gehäuse endseitig verschließt und wobei in die schwingfähige Einheit mindestens ein Hohlraum eingebracht ist, welcher von einem durch das Gehäuse gebildeten Innenraum her zugänglich ist, mit einer Antriebs-/Empfangseinheit zum Anregen der schwingfähigen Einheit zu mechanischen Schwingungen und zum Empfangen der mechanischen Schwingungen und Umwandeln in ein elektrisches Empfangssignal, und mit einer Regel-/Auswerteeinheit zur Regelung oder Steuerung der Schwingungsanregung und zur Auswertung des Empfangssignals in Bezug auf die Prozessgröße,
wobei in dem Fall einer Schwinggabel die schwingfähige Einheit ein erstes stab- oder paddelförmiges Element und ein zweites stab- oder paddelförmiges Element aufweist, welche über eine Basis miteinander verbunden sind, wobei in einem basisnahen Wurzelbereich des ersten Elements ein erster Hohlraum und in einem basisnahen Wurzelbereich des zweiten Elements ein zweiter Hohlraum zur Aufnahme der Antriebs-/Empfangseinheit eingebracht ist, wobei die Antriebs-/Empfangseinheit zwei piezoelektrische Einheiten aufweist, wobei die zwei piezoelektrischen Einheiten der Antriebs-/Empfangseinheit in den ersten und zweiten Hohlraum derart eingebracht sind und die beiden Hohlräume derart mit einem Vergussmaterial gefüllt sind, dass die Antriebs-/Empfangseinheit über das Vergussmaterial kraftschlüssig mit jeweils einer Wandung des ersten und zweiten Hohlraums verbunden ist,
oder
wobei in dem Fall eines Einstabs die schwingfähige Einheit als stabförmiger Hohlkörper mit einer in einem Inneren des Hohlkörpers an einer Wandung des Hohlkörpers angeformten Innenmasse ausgestaltet ist, wobei die Antriebs-/Empfangseinheit eine piezoelektrische Einheit aufweist, wobei die Antriebs-/Empfangseinheit in einen in die Innenmasse eingebrachten dritten Hohlraum eingebracht ist, wobei die Antriebs-/Empfangseinheit derart in den dritten Hohlraum eingebracht ist und der dritte Hohlraum derart mit einem Vergussmaterial gefüllt ist, dass die Antriebs-/Empfangseinheit über das Vergussmaterial kraftschlüssig mit einer Wandung des dritten Hohlraums verbunden ist.

In einer ersten Ausgestaltung weist die Antriebs-/Empfangseinheit im Fall eines Einstabs eine oder im Fall einer Schwinggabel zwei piezoelektrische Einheiten in Form von Bimorphpiezos auf. Die kraftschlüssige Kopplung der piezoelektrischen Einheit mit der schwingfähigen Einheit ist über das Vergussmaterial, mit welchem der mindestens eine Hohlraum gefüllt ist, hergestellt.

Eine Ausgestaltung sieht vor, dass die piezoelektrische Einheit ein erstes flächiges piezoelektrisches Element und ein zweites flächiges piezoelektrisches Element umfasst, welche mit jeweils einer Seitenfläche unter Ausbildung einer Kontaktfläche kraftschlüssig miteinander verbunden sind, und welche in senkrechter Richtung zu der Kontaktfläche polarisiert sind, wobei zumindest die jeweils der Kontaktfläche abgewandte Seitenfläche der piezoelektrischen Elemente mit einer Elektrode zur Beaufschlagung mit einem Anregungssignal und zum Abgreifen des Empfangssignals versehen ist. Die Verbindung zwischen den beiden piezoelektrischen Elementen ist vorzugsweise mittels eines Klebers oder eines Lots hergestellt, sodass die beiden piezoelektrischen Elemente über eine elektrisch leitfähige Zwischenschicht miteinander verbunden sind. In einer Variante sind die piezoelektrischen Elemente in entgegengesetzte Richtungen polarisiert und die leitfähige Zwischenschicht ist mit dem Massepotential verbunden. Bei Anlegen eines Anregungssignals in Form einer Wechselspannung an die beiden Elektroden führen die beiden piezoelektrischen Elemente gegenphasige periodische Verformungen in Form von Dehnungen und Schrumpfungen aus. In einer anderen Variante, welche ebenfalls zu einer gegenphasigen periodischen Verformung führt, ist die Zwischenschicht als dritte Elektrode ausgebildet und die drei Elektroden sind derart mit dem Anregungssignal beaufschlagt, dass sich die beiden außen liegenden Elektroden auf demselben Potential befinden und die dritte Elektrode das entgegengesetzte Potential trägt. Bei beiden Varianten der piezoelektrischen Einheit entstehen Biegekräfte.

Gemäß einer alternativen Ausgestaltung weist die Antriebs-/Empfangseinheit im Fall eines Einstabs eine oder im Fall einer Schwinggabel zwei piezoelektrische Einheiten mit je einem piezoelektrischen Element und je einem passiven Element auf, wobei das piezoelektrische Element mit einem Anregungssignal beaufschlagbar ist, und wobei das piezoelektrische Element mit dem passiven Element derart mechanisch verbunden ist, dass die Beaufschlagung des piezoelektrischen Elements mit dem Anregungssignal zu Biegeverformungen der piezoelektrischen Einheit führt. Das passive Element besteht hierbei aus einem nicht-piezoelektrischen Material, beispielsweise einer Keramik oder einem Metall, und dient dazu die mechanischen Spannungen, welche bei der Beaufschlagung des piezoelektrischen Elements mit dem Anregungssignal entstehen, in eine Biegeverformung umzusetzen. Eine derartige piezoelektrische Einheit ist auch unter der Bezeichnung Unimorphpiezo bekannt. In einer ersten Variante ist das piezoelektrische Element auf zwei gegenüberliegenden Seitenflächen mit je einer Elektrode versehen und homogen polarisiert. Die gegenüberliegende Seitenfläche, bei welcher es sich vorzugsweise um die mit dem passiven Element in Kontakt stehende Seitenfläche handelt, liegt vorzugsweise auf dem Massepotential der Regel-/Auswerteeinheit. In einer zweiten Variante sind zwei Regionen entgegengesetzter Polarisation ausgebildet und die aktiven Elektroden auf derselben Seitenfläche auf- oder eingebracht, während die gegenüberliegende Seitenfläche eine gemeinsame Elektrode aufweist. Vorzugsweise befindet sich die gemeinsame Elektrode auf derjenigen Seitenfläche, welche mit dem passiven Element in Kontakt steht. Die gemeinsame Elektrode bildet vorzugsweise eine fließende Masse, d.h. eine von der Masse der Regel-/Auswerteeinheit isolierte Masse.

In einer Ausgestaltung ist zumindest die schwingfähige Einheit aus einem Kunststoff oder aus einem Kompositwerkstoff aus Kunststoff und Glasfasern, Glasperlen, Kohlefasern und/oder Keramikpulver gefertigt. Derartige auch als gefüllte Kunststoffe bezeichnete Kompositwerkstoffe sind auf Grund ihrer Robustheit, Stabilität und hohen mechanischen Güte besonders gut als Werkstoff für eine erfindungsgemäße Vorrichtung geeignet. In einer besonders preisgünstigen Variante ist auch das Gehäuse der Vorrichtung aus einem Kunststoff gefertigt.

In einer anderen Ausgestaltung ist zumindest die schwingfähige Einheit aus einem Metall oder einer Metalllegierung, einer Keramik, einem Glas oder einem Kompositwerkstoff aus Keramik und Glas oder Keramik und Metall gefertigt.

Gemäß einer Ausgestaltung ist zumindest für den Fall, dass die schwingfähige Einheit aus einem elektrisch leitfähigen Material besteht, mindestens eine Abdeckung oder Beschichtung aus einem elektrisch isolierenden Werkstoff auf die Antriebs-/Empfangseinheit aufgebracht. Bei einer piezoelektrischen Einheit sind zumindest die Elektroden mit einem Plättchen, z.B. aus Glas oder Keramik, abgedeckt oder mit einer Beschichtung, vorzugsweise aus Glas oder Keramik, beschichtet. Alternativ kann die piezoelektrische Einheit auch in einen isolierenden Werkstoff eingegossen sein. Beispielsweise ist der Werkstoff eine Mischung aus Epoxidharz und Korundpulver oder Glasperlen. Dieser Werkstoff kann auch als Vergussmaterial für den Hohlraum dienen.

Eine Ausgestaltung der Erfindung sieht vor, dass die Steifigkeit des Vergussmaterials, mit welchem der erste, zweite oder dritte Hohlraum gefüllt ist, im Wesentlichen der Steifigkeit des Materials der schwingfähigen Einheit entspricht. Hierdurch findet eine optimale Kraftübertragung von der in dem Vergussmaterial eingebetteten Antriebs-/Empfangseinheit auf die mechanisch schwingfähige Einheit statt. Im Fall einer aus Kunststoff ausgebildeten schwingfähigen Einheit ist das Vergussmaterial entsprechend derart gewählt, dass dessen Steifigkeit der Steifigkeit des Kunststoffes entspricht, aus welchem die schwingfähige Einheit gefertigt ist. Beispielsweise ist dies für einen Klebstoff der Fall.

In einer Ausgestaltung besteht das Vergussmaterial, mit welchem der erste, zweite oder dritte Hohlraum gefüllt und/oder der Werkstoff, mit welchem die Antriebs-/Empfangseinheit beschichtet ist, im Wesentlichen aus Epoxydharz, aus Epoxydharz und Korundpulver, Epoxydharz und Keramikpulver, Epoxydharz und Sand oder aus Epoxydharz und Glasperlen oder-fasern. Für das Vergussmaterial ist insbesondere ein Kompositwerkstoff aus 30 bis 60 Volumenprozent Epoxidharz und 70 bis 30 Volumenprozent Korundpulver oder Glasperlen geeignet.

Eine mit der Ausgestaltung als Schwinggabel verbundene vorteilhafte Ausgestaltung sieht vor, dass zwei piezoelektrische Einheiten auf einer Platte, insbesondere einer Leiterplatte, aufgebracht sind, und dass die Platte derart ausgestaltet und die piezoelektrischen Einheiten derart auf der Platte angeordnet sind, dass die piezoelektrischen Einheiten in den ersten und zweiten Hohlraum einbringbar sind. Bei der Platte handelt es sich vorzugsweise um eine flexible Leiterplatte. Die Platte kann jedoch auch eine starre Leiterplatte, eine Kunststoffplatte, eine Folie oder ein Blech sein.

Gemäß einer Ausgestaltung beaufschlagt die Regel-/Auswerteeinheit im Fall einer Schwinggabel die Antriebs-/Empfangseinheit derart mit einem Anregungssignal, dass die stab- oder paddelförmigen Elemente Biegeschwingungen in entgegengesetzte Richtungen durchführen. Mit anderen Worten führen die beiden stab- oder paddelförmigen Elemente Schwingungen in der Grundmode aus.

In einer Ausgestaltung ist im Falle eines Einstabs die Innenmasse stabförmig, und der dritte Hohlraum mit der Antriebs-/Empfangseinheit ist derart angeordnet, dass die Innenmasse und der Hohlkörper Biegeschwingungen in entgegengesetzter Richtung durchführen.

Die Montage erfolgt vorzugsweise derart, dass die Hohlräume der Schwinggabel bzw. der Hohlraum des Einstabs mit dem Vergussmaterial befüllt werden und in das noch flüssige Vergussmaterial die Antriebs-/Empfangseinheit eingesteckt wird. Nachfolgend härtet das Vergussmaterial aus und die Antriebs-/Empfangseinheit ist in dem Hohlraum fixiert. Ein umständliches direktes Aufbringen, insbesondere Aufkleben, der Antriebs-/Empfangseinheit auf die Wandung der Hohlräume bzw. des Hohlraums entfällt. Die erfindungsgemäße Ausgestaltung bzw. Anordnung der Antriebs-/Empfangseinheit ist insbesondere für Messgeräte mit einer aus einem Kunststoff gefertigten schwingfähigen Einheit geeignet.

Die Erfindung wird anhand der nachfolgenden Figuren näher erläutert. Es zeigen jeweils in schematischer Darstellung:
- Fig. 1: ein Füllstandsmessgerät in einem Behälter;
- Fig. 2: eine schwingfähige Einheit in Form einer Schwinggabel mit Hohlräumen;
- Fig. 3: ein Elektronikmodul mit integrierter Antriebs-/Empfangseinheit;
- Fig. 4a: eine piezoelektrische Einheit in Form eines Bimorphpiezos;
- Fig. 4b: eine Ausgestaltung einer piezoelektrischen Einheit für ein Modul nach Fig. 3;
- Fig. 4c: eine Variante einer piezoelektrischen Einheit in Form eines Bimorphpiezos;
- Fig. 4d: eine piezoelektrische Einheit mit einem passiven Element;
- Fig. 4e: eine Variante einer piezoelektrischen Einheit mit einem passiven Element;
- Fig. 4f: zwei piezoelektrische Einheiten zum Einbringen in eine Schwinggabel nach Fig. 2 mit elektrischer Kontaktierung;
- Fig. 5a: eine erste Ausgestaltung einer schwingfähigen Einheit in Form eines Einstabs mit Hohlraum;
- Fig. 5b: eine zweite Ausgestaltung einer schwingfähigen Einheit in Form eines Einstabs mit Hohlraum.

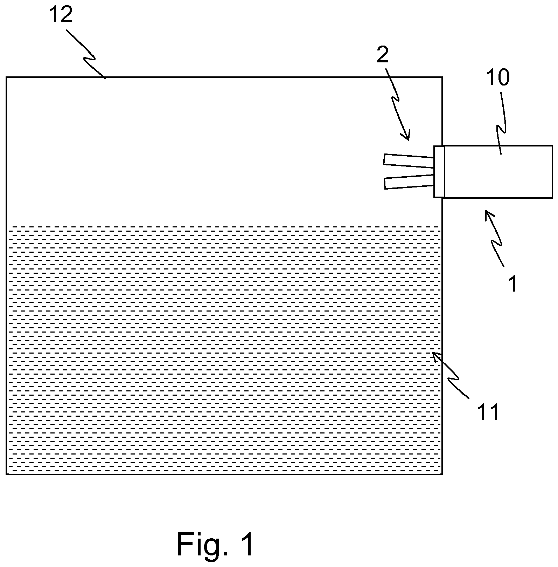

In Fig. 1 ist ein mit einem Medium 11 befüllter Behälter 12 dargestellt, dessen Grenzstand zu überwachen ist. Auf einer Höhe in die Wandung des Behälters 12, welche dem zu überwachenden Grenzstand entspricht, ist ein Messgerät 1 mit einer schwingfähigen Einheit 2 eingebracht. Die schwingfähige Einheit 2 besitzt zwei stabförmige Elemente 21, 22, welche insbesondere bei der Anwendung in flüssigen oder festen pulverartigen Medien auch paddelförmig sein können, und in den Behälter 12 hineinragen, während das Gehäuse 10 außerhalb des Behälters 12 verbleibt. In dem Gehäuse 10 sind beispielsweise elektronische Komponenten zur Steuerung, Regelung und/oder Auswertung der Messung angeordnet. Die schwingfähige Einheit 2 führt mechanische Schwingungen mit der Resonanzfrequenz aus, wobei die beiden stabförmigen Elemente 21, 22 Biegeschwingungen aufeinander zu bzw. voneinander weg ausführen. Aus einer Änderung der Schwingfrequenz ist eine Änderung des Umgebungsmediums, in welchem die schwingfähige Einheit 2 schwingt, und hierdurch das Erreichen des zu überwachenden Grenzfüllstands detektierbar.

Neben der Bestimmung oder Überwachung eines Füllstands des Mediums 11 ist mittels des Messgeräts 1 weiterhin die Dichte oder die Viskosität einer Flüssigkeit an Hand der Schwingungen der schwingfähigen Einheit 2 bestimmbar bzw. ein Grenzwert für diese Prozessgrößen überwachbar.

Im Stand der Technik erfolgt die Schwingungsanregung in der Regel über eine piezoelektrische Wandlereinheit, welche auf einer dem Medium 11 abgewandten Rückseite einer Membran, an welcher die stabförmigen Elemente 21, 22 angeformt sind, angeordnet ist. Die Wandlereinheit kann derart ausgestaltet sein, dass ein einzelnes oder als Bimorphelement ausgestaltetes piezoelektrisches Element sowohl als Sender als auch Empfänger dient, oder die Wandlereinheit umfasst mehrere piezoelektrische Elemente, welche jeweils Sender oder Empfänger sind.

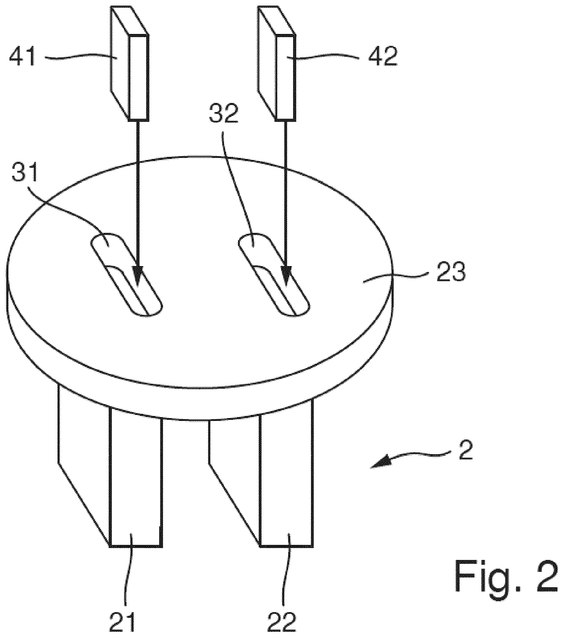

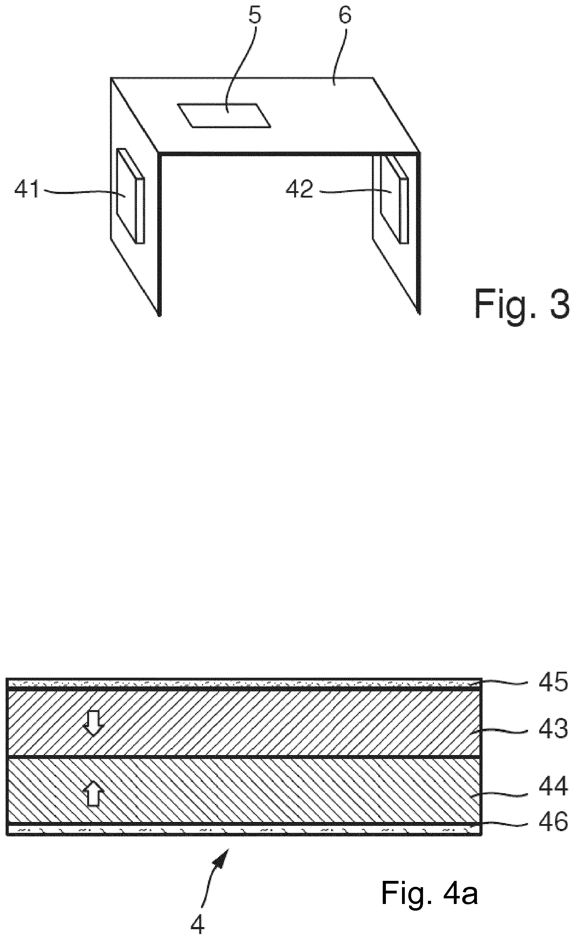

Erfindungsgemäß ist die Antriebs-/Empfangseinheit nicht auf einer Membran angeordnet, sondern in taschenartigen Hohlräumen in den stabförmigen Elementen 21, 22. Dieser Aufbau ist in Fig. 2 dargestellt. Mögliche Ausgestaltungen der Antriebs-/Empfangseinheit 4 sind in den Fig. 4a - 4e dargestellt.

Fig. 2 offenbart eine schematische Ansicht einer schwingfähigen Einheit 2 mit einem ersten stabförmigen Element 21 und einem zweiten stabförmigen Element 22, welche an einer kreisförmigen Basis 23 angeformt sind. Die stabförmigen Elemente 21, 22 sind hierbei nur schematisch dargestellt. Vorzugsweise besitzen die stabförmigen Elemente 21, 22 eine an das Anwendungsgebiet des Messgeräts angepasste Form, beispielsweise für den Einsatz in Flüssigkeiten oder Gasen eine aus dem Stand der Technik bekannte Paddelform.

Die Basis 23 ist vorzugsweise nicht als Membran ausgestaltet, sondern relativ dick. Beispielsweise beträgt die Dicke der Basis 23 bei einem Durchmesser von 1,5 Zoll ca. 3-10 mm. In einer alternativen Ausgestaltung ist die Basis 23 dünn, das sich an die Basis 23 anschließende Gehäuse jedoch zumindest in einem Bereich nahe der Basis 23 mit einem festen Kunststoff gefüllt. In die Basis 23 und die stabförmigen Elemente 21, 22 sind zwei Hohlräume 31, 32 eingebracht. Der erste Hohlraum 31 reicht bis in den Wurzelbereich des ersten stabförmigen Elements 21 und der zweite Hohlraum 32 reicht entsprechend in den Wurzelbereich des zweiten stabförmigen Elements 22. Bis auf die beiden Hohlräume 31, 32 sind die stabförmigen Elemente 21, 22 massiv. Beide Hohlräume 31, 32 sind von der Basis 23 her zugänglich, sodass eine erste piezoelektrische Einheit 41 in den ersten Hohlraum 31 und eine zweite piezoelektrische Einheit 42 in den zweiten Hohlraum 32 einbringbar sind. Die beiden Hohlräume 31, 32 sind derart dimensioniert, dass die piezoelektrischen Einheiten 41, 42 zumindest abschnittsweise in den stabförmigen Elementen 21, 22 und abschnittsweise in der Basis 23 angeordnet sind. Die piezoelektrischen Einheiten 41, 42 können aber auch komplett in den stabförmigen Elementen 21, 22 angeordnet sein.

Die beiden piezoelektrischen Einheiten 41, 42 bilden die Antriebs-/Empfangseinheit 4 der Schwinggabel und dienen jeweils sowohl der Anregung als auch dem Empfang von mechanischen Schwingungen der beiden stabförmigen Elemente 21, 22. Die beiden flachen Seitenflächen der piezoelektrischen Einheiten 41, 42 sind als Elektroden ausgestaltet und jeweils mit einer Anschlussleitung kontaktierbar, über welche die piezoelektrischen Einheiten 41, 42 mit einem Anregungssignal beaufschlagbar und ein Empfangssignal von diesen abgreifbar ist.

Die piezoelektrischen Einheiten 41, 42 sind jeweils zusammen mit einem geeigneten Vergussmaterial in die Hohlräume 31, 32 eingebracht. Das Vergussmaterial dient dazu, die piezoelektrischen Einheiten 41, 42 zu fixieren und die Biegeverformungen der piezoelektrischen Einheiten 41, 42 auf die stabförmigen Elemente 21, 22 zu übertragen, sodass letztere Biegeschwingungen durchführen. Die genaue Position einer piezoelektrischen Einheit 41, 42 in einem Hohlraum 31, 32 ist für die Schwingungsanregung unerheblich; die piezoelektrischen Einheiten 41, 42 können parallel zu den Seitenwänden der Hohlräume 31, 32 ausgerichtet sein oder auch maximal geneigt sein. Da die piezoelektrischen Einheiten 41, 42 nicht exakt positioniert werden müssen und zudem nicht an einer Wandung der Hohlräume 31, 32 zu befestigen sind, ist die Montage besonders einfach.

Der Einbau der piezoelektrischen Einheiten 41, 42 ist Poka-Yoke-fähig, d.h. sicher gegenüber Einbaufehlern. Zum einen ist die erste piezoelektrische Einheit 41 identisch zu der zweiten piezoelektrischen Einheit 42, sodass die beiden piezoelektrischen Einheiten 41, 42 austauschbar in dem ersten Hohlraum 31 oder dem zweiten Hohlraum 32 anordenbar sind. Zum anderen ist eine symmetrische Ausgestaltung der piezoelektrischen Einheit 41, 42 möglich, sodass eine Drehung um 180° beim Einbringen in den Hohlraum 31, 32 keine Rolle spielt. Eine symmetrische Ausgestaltung ist beispielsweise in Fig. 4a dargestellt.

Das Vergussmaterial, mittels welchem die piezoelektrischen Einheiten 41, 42 in die Hohlräume 31, 32 eingegossen sind, ist beispielsweise ein Klebstoff. Das Vergussmaterial ist derart gewählt, dass die von den piezoelektrischen Einheiten 41, 42 ausgehenden mechanischen Spannungen effektiv an die stabförmigen Elemente 21, 22 übertragen werden. Die Steifigkeit des Vergussmaterials sollte hierzu ungefähr der Steifigkeit des Materials der schwingfähigen Einheit 2 entsprechen. Die schwingfähige Einheit 2 besteht in einer Ausgestaltung aus Kunststoff, insbesondere einem harten Kunststoff. Als Material für die schwingfähige Einheit 2 sind insbesondere Kompositwerkstoffe geeignet, beispielsweise gefüllte oder armierte Kunststoffe, welche mit Glasfasern, Glasperlen, Keramikpulver oder Kohlefasern verstärkt sind. Eine schwingfähige Einheit 2 aus einem Kunststoff oder einem Kompositwerkstoff ist besonders einfach und kostengünstig als Spritzgussteil herstellbar. Ein Werkstoff, dessen Steifigkeit ungefähr derjenigen eines Kunststoffs entspricht und somit bei einer Kunststoffausführung der Vorrichtung oder zumindest der schwingfähigen Einheit 2 als Füllstoff geeignet ist, ist ein Epoxidharz, insbesondere ein Epoxidharz mit einer Glasübergangstemperatur von über 100°C.

In einer anderen Ausgestaltung handelt es sich bei der schwingfähigen Einheit 2 um ein Keramikteil, welches beispielsweise mittels CIM - Ceramic Injection Moulding - herstellbar ist. Geeignete Keramiken sind beispielsweise Aluminiumoxid, Steatit, Zirkonoxid, Porzellan, oder Siliziumkarbid. In wieder anderen Ausgestaltungen besteht die schwingfähige Einheit 2 aus einem Glas, beispielsweise Borosilikatglas oder Quarzglas, aus einer Glaskeramik oder aus einem Verbund aus Keramik und Glaspartikeln oder einem Verbund aus Keramik und Metallpartikeln.

Der dargestellte Antrieb ist jedoch auch bei gewöhnlichen metallischen schwingfähigen Einheiten 2 einsetzbar. In diesem Fall sind die piezoelektrischen Einheiten 41, 42 mit einer Isolierung versehen, um einen Kurzschluss mit der leitfähigen Wandung der Hohlräume 31, 32 zu vermeiden. Das Vergussmaterial ist bei einer metallischen schwingfähigen Einheit 2 vorzugsweise ein fester Klebstoff, welcher Zusätze zur Verstärkung enthält, beispielsweise in Form von Korund-, Siliziumkarbid- oder Metallpartikeln. Vorteilhaft ist weiterhin ein geringer Abstand zwischen der Wandung eines Hohlraums 31, 32 und der darin eingebrachten piezoelektrischen Einheit 41, 42.

Die Anbringung der Antriebs-/Empfangseinheit 4 in Form zweier piezoelektrischer Einheiten 41, 42 in Hohlräumen 31, 32 in den stabförmigen Elementen 21, 22 unter Befestigung mittels Verguss führt zu einem sehr stabilen Messgerät. Stabilität bei hoher Druckbelastung ist insbesondere für Schwinggabeln aus Kunststoff wichtig, die deutlich elastischer sind als Metalle. Durch eine Druckbelastung kann nicht nur der Kunststoff brechen, sondern durch eine elastische und plastische Verformung im Kunststoff können die empfindlichen piezokeramischen Bauteile reißen. Würde die piezoelektrische Antriebs-/Empfangseinheit 4 wie es bei metallischen Schwinggabeln häufig der Fall ist, auf einer als Membran ausgestalteten Basis angeordnet werden, müsste die Membran relativ dick ausgestaltet werden. Dies würde bei dem auf der Membran befestigten piezoelektrischen Antrieb jedoch zu starken Effizienzverlusten führen, welche soweit reichen können, dass der Sensor unbrauchbar ist. Der an Hand der Fig. 2 illustrierte Aufbau stellt unabhängig von dem Material der schwingfähigen Einheit 2 einen effizienten Antrieb sicher.

Fig. 3 zeigt ein Elektronikmodul, welches die Montage des Messgeräts 1 mit einer schwingfähigen Einheit 2 in Form einer Gabel nach Fig. 2 weiter vereinfacht. Auf einem zentralen Abschnitt einer Leiterplatte 6 sind elektronische Komponenten angeordnet. Die elektronischen Komponenten dienen beispielsweise der Erzeugung des Anregungssignals und/oder der Auswertung des Empfangssignals in Bezug auf die Messgröße. Vorzugsweise befindet sich unter den elektronischen Komponenten auch eine Logikeinheit, beispielsweise in Form eines Mikrocontrollers. Auf der Leiterplatte 6 können je nach Ausgestaltung der Elektronikeinheit des Messgeräts 1 einige Teile der Elektronikeinheit oder auch die gesamte Elektronikeinheit des Messgeräts 1 angeordnet sein. In den beiden Randbereichen der Leiterplatte 6 ist jeweils eine piezoelektrische Einheit 41, 42 nach Fig. 4a angeordnet. Über Leiterbahnen auf der Leiterplatte 6 sind die piezoelektrischen Einheiten 41, 42 mit den elektronischen Komponenten verbunden. In einer alternativen Ausgestaltung sind die piezoelektrischen Einheiten 41, 42 auf ein Blech oder eine Kunststoffplatte an Stelle der Leiterplatte 6 aufgebracht. Ein Vorteil der Leiterplatte 6 besteht darin, dass jeweils eine der Elektroden einer piezoelektrischen Einheit 41, 42 direkt, beispielsweise mittels eines Leitklebers, auf eine metallische Fläche der Leiterplatte 6 aufbringbar und somit besonders einfach kontaktierbar ist.

Die Randbereiche der Leiterplatte 6 sind gegenüber dem zentralen Abschnitt derart abgewinkelt oder abwinkelbar, dass die beiden Endbereiche mit den piezoelektrischen Einheiten 41, 42 in die beiden Hohlräume 31, 32 in den stabförmigen Elementen 21, 22 einbringbar sind, während der zentrale Abschnitt außerhalb der Hohlräume 31, 32 verbleibt. Durch den in den Hohlräumen 31, 32 befindlichen Verguss sind die beiden Endbereiche der Leiterplatte 6 in den Hohlräumen 31, 32 fixiert. Die Leiterplatte 6 ist flexibel oder starr ausgebildet. Die Integration der piezoelektrischen Einheiten 41, 42 in eine Leiterplatte 6 zur Ausbildung eines Elektronikmoduls ermöglicht eine besonders schnelle und sichere Anbringung in der schwingfähigen Einheit 2.

Die Figuren 4a bis 4e illustrieren verschiedene Ausgestaltungsformen einer piezoelektrischen Einheit 41. Die Antriebs-/Empfangseinheit 4 einer schwingfähigen Einheit 2 in Form einer Schwinggabel weist mindestens zwei derartige piezoelektrische Einheiten 41, 42 auf, welche in jeweils einen Hohlraum 31, 32 der stabförmigen Elemente 21, 22 eingebracht sind. Die Antriebs-/Empfangseinheit 4 eines Einstabes hingegen umfasst vorzugsweise nur eine solche piezoelektrische Einheit 41.

In Fig. 4a ist ein Querschnitt durch eine als Bimorphpiezo ausgestaltete piezoelektrische Einheit 41 dargestellt. Die piezoelektrische Einheit 41 besteht im Wesentlichen aus einem ersten piezoelektrischen Element 43 und einem zweiten piezoelektrischen Element 44, welche jeweils von flächiger Gestalt und homogen polarisiert sind. Eine Seitenfläche des ersten piezoelektrischen Elements 43 ist mit einer Seitenfläche des zweiten piezoelektrischen Elements 44 beispielsweise mittels eines Klebers oder Lots fest und kraftschlüssig verbunden. Die hierbei als Kontaktfläche entstehende Elektrode wird jedoch nicht mit einem Potenzial beaufschlagt.

Die voneinander abgewandten frei liegenden Seitenflächen der piezoelektrischen Elemente 43, 44 sind jeweils mit einer Elektrode 45, 46 beschichtet, bzw. die Elektroden 45, 46 sind auf die Seitenflächen aufgebracht. Die Elektroden 45, 46 sind beispielsweise mittels eines Konstruktionsklebers, Diffusionsschweißung oder Elektrodenimplementierung in die Piezokeramik - so genannte Cofired Elektroden - herstellbar.

Die beiden piezoelektrischen Elemente 43, 44 sind derart relativ zueinander angeordnet, dass deren Polarisationsrichtung entgegengesetzt ist. Die Polarisationsrichtung ist in der Figur durch die Pfeile angedeutet. Die erste Elektrode 45 und die zweite Elektrode 46 sind jeweils mit einer Anschlussleitung zur Verbindung mit einer Regel-/Auswerteeinheit kontaktierbar, welche die Beaufschlagung der Elektroden 45, 46 mit einem elektrischen Anregungssignal steuert und ein elektrisches Empfangssignal von der piezoelektrischen Einheit 41 empfängt und in Bezug auf die Prozessgröße auswertet.

Die Beaufschlagung der ersten Elektrode 45 und der zweiten Elektrode 46 erfolgt mit einer Wechselspannung. Es ergibt sich eine Reihenschaltung der beiden piezoelektrischen Elemente 43, 44. Durch die entgegengesetzte Polarisationsrichtung der Piezoelemente 43, 44 zieht sich bei einer derartigen Beaufschlagung das erste piezoelektrische Element 43 zusammen, während das zweite piezoelektrische Element 44 expandiert, und umgekehrt. Insgesamt führt die piezoelektrische Einheit 41 eine wechselseitige Biegeverformung aus. Die kraftschlüssige Verbindung zwischen dem ersten piezoelektrischen Element 43 und dem zweiten piezoelektrischen Element 44 ist wichtig, damit mittels der gefügten piezoelektrischen Elemente 43, 44 eine höchstmögliche Biegeverformung der piezoelektrischen Einheit 41 entsteht.

Ein Vorteil einer gemäß Fig. 4a ausgestalteten piezoelektrischen Einheit 41 besteht darin, dass auf Grund der am Ort der ersten Elektroden 45 und am Ort der zweiten Elektrode 46 jeweils gleichen Polarität der piezoelektrischen Elemente 43, 44 auch bei hohen Temperatursprüngen, so genannten Temperaturschocks, keine pyroelektrische Spannung entsteht. Ein Messgerät mit einer Antriebs-/Empfangseinheit 4 in Form von einer oder mehreren derartigen piezoelektrischen Einheiten 41, 42 ist daher besonders sicher und zum Einsatz in explosionsgeschützten Bereichen geeignet.

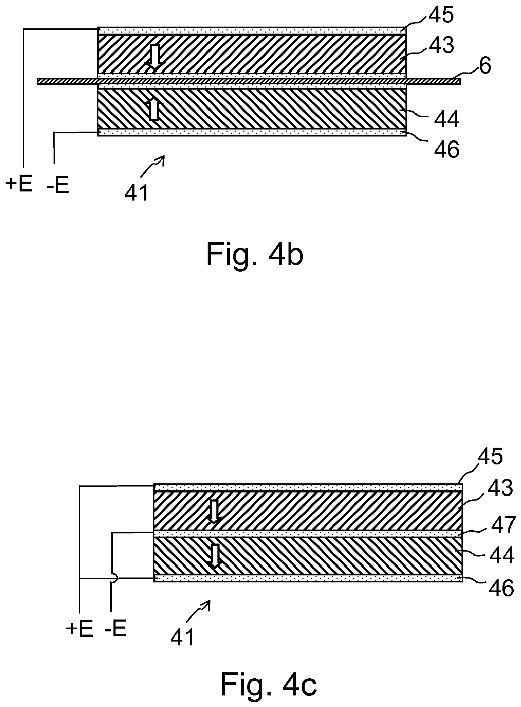

In Fig. 4b ist eine Variante der Fig. 4a dargestellt, wobei die beiden piezoelektrischen Elemente 43, 44 ebenfalls in entgegengesetzte Richtungen polarisiert sind. Die beiden piezoelektrischen Elemente 43, 44 sind jedoch nicht direkt aneinander geklebt, sondern zumindest im Wesentlichen deckungsgleich auf gegenüberliegenden Seiten einer dünnen Platte 6 befestigt. Beispielsweise handelt es sich um ein Blech oder um eine Leiterplatte. In einer bevorzugten Ausgestaltung handelt es sich um die eine Leiterplatte, welche im Bereich der piezoelektrischen Elemente 43, 44 keine Isolierung aufweist, sodass die beiden der Platte 6 zugewandten und mit einer Elektrode, beispielsweise in Form einer elektrisch leitfähigen Beschichtung, versehenen Seitenflächen der piezoelektrischen Elemente 43, 44 über die frei liegende metallische Schicht der Leiterplatte 6 in leitfähigem Kontakt miteinander stehen und sich auf dem gleichen elektrischen Potential befinden. Die in Fig. 4b dargestellte Ausgestaltung ist insbesondere für ein Modul nach Fig. 3 geeignet. In den beiden Endbereichen der Leiterplatte 6 sind dann jeweils zwei piezoelektrische Elemente 43, 44 derart angeordnet, dass die Leiterplatte 6 zwischen ihnen liegt. Auch bei dieser Ausgestaltung tritt keine pyroelektrischen Spannung zwischen den beiden Elektroden 45, 46 auf.

In Fig. 4c ist eine Ausgestaltung offenbart, in welcher die Polarisationsrichtung der beiden piezoelektrischen Elemente 43, 44 übereinstimmt. Die Kontaktfläche der beiden piezoelektrischen Elemente 43, 44 wird von einer dritten Elektrode 47 gebildet, welche beispielsweise in Form einer metallischen Beschichtung vorliegt. Während die beiden äußeren Elektroden 45, 46 bei der Beaufschlagung mit dem Anregungssignal auf demselben Potential liegen, befindet sich die in der Mitte liegende dritte Elektrode 47 auf dem entgegengesetzten Potential oder auf Masse. Bei dieser Beaufschlagung entstehen die gleichen mechanischen Spannungen in der piezoelektrischen Einheit 41 wie bei der Ausgestaltung nach Fig. 4a, sodass die piezoelektrische Einheit 41 die gleichen Biegeverformungen erfährt. Jedoch ist die Auslenkung höher als bei der in Fig. 4a dargestellten Variante, da durch die effektive Parallelschaltung der beiden piezoelektrischen Elemente 43, 44 an Stelle der Serienschaltung jeweils die komplette Anregungsspannung an dem ersten piezoelektrischen Element 43 und an dem zweiten piezoelektrischen Element 44 anliegt. Die Effizienz eines Antriebs nach Fig. 4c ist deshalb besonders hoch. Zudem ist auch diese Ausgestaltung pyroelektrisch geschützt.

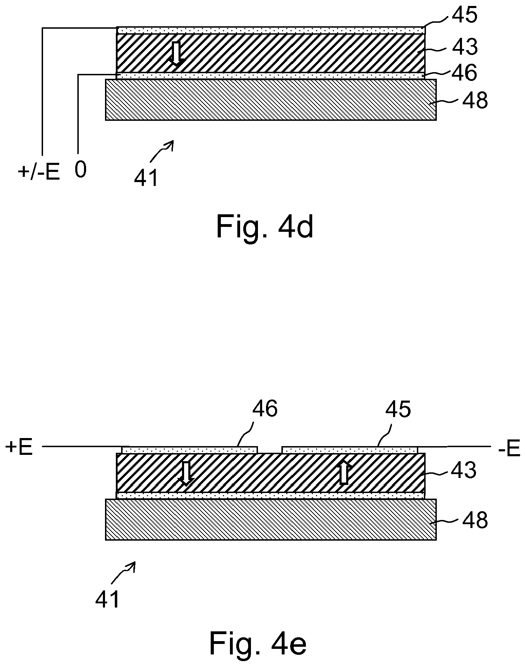

Fig. 4d zeigt eine Variante einer piezoelektrischen Einheit 41 mit nur einem homogen polarisierten piezoelektrischen Element 43. Um die bei der Beaufschlagung mit dem Anregungssignal entstehenden mechanischen Spannungen bzw. Biegekräfte in eine Biegeverformung umzuwandeln ist das piezoelektrische Element 43 mit einer Seitenfläche an einem passiven Element 48 angebracht, beispielsweise durch Kleben oder Löten. Das passive Element 48 ist als passiv bezeichnet, weil es keine piezoelektrischen Eigenschaften besitzt und auch nicht mit einer Spannung beaufschlagt wird. Die Abmessungen des passiven Elements 48 sind vorzugsweise zumindest so groß, dass die Seitenfläche des piezoelektrischen Elements 43, welche die Kontaktfläche bildet, vollständig mit dem passiven Element 48 in Kontakt steht. Weiterhin ist das Material des passiven Elements 48 derart gewählt, dass dessen Elastizitätsmodul ähnlich dem des piezoelektrischen Materials des mit ihm in festem Kontakt stehenden piezoelektrischen Elements 43 besitzt. Beispielsweise handelt es sich bei dem passiven Element 48 um eine Scheibe aus einem Metall, wie z.B. Stahl, Aluminium, Titan, Bronze, Messing oder Kupfer, oder aus einer Keramik, z.B. Aluminiumoxid, Porzellan oder Steatit. Die frei liegende Seitenfläche des piezoelektrischen Elements 43, sowie die Kontaktfläche, sind zur Ausbildung einer Elektrode 45, 46 jeweils mit einer metallischen Beschichtung versehen. Die Elektroden 45, 46 sind mit dem Anregungssignal beaufschlagbar.

In Fig. 4e ist eine weitere Variante mit einem nicht-piezoelektrischen passiven Element 48 dargestellt. Auf dem flächigen passiven Element 48 ist ein piezoelektrisches Element 43 aufgebracht, welches zwei Regionen entgegengesetzter Polarisation aufweist. Die Polarisationsrichtung verläuft senkrecht zu der Kontaktfläche zwischen piezoelektrischem Element 43 und passivem Element 48. Die beiden Regionen sind auf der frei liegenden Seitenfläche des piezoelektrischen Elements 43 jeweils mit einer Elektrode 45, 46 versehen, an welche das Anregungssignal anlegbar ist. Die Kontaktfläche zwischen piezoelektrischem Element 43 und passivem Element 48 ist als inaktive Elektrode ausgebildet, d.h. ohne mit einem Potential der Antriebs-/Empfangseinheit verbunden zu sein.

Die in Fig. 4a - 4e dargestellten piezoelektrischen Einheiten 41 sind in Messgeräten 1 mit einer schwingfähigen Einheit 2 aus einem beliebigen Material einsetzbar. Bei einer metallischen schwingfähigen Einheit 2 besitzt der eingebrachte Hohlraum 3, 31 eine elektrisch leitfähige Wandung. Um einen elektrischen Kontakt zwischen Wandung und piezoelektrischer Einheit 41 zu vermeiden ist letztere in einer isolierten Ausführungsform herstell- und einsetzbar. Die Isolierung besteht beispielsweise aus einer Beschichtung, welche zumindest auf die beiden Elektroden 45, 46 aufgebracht ist. Die Beschichtung ist beispielsweise eine Keramik oder ein Glas. In einer Ausgestaltung ist die gesamte piezoelektrische Einheit 41 von einer Isolierschicht umhüllt. Beispielsweise ist eine derartige Beschichtung durch Eingießen der piezoelektrischen Einheit 41 in das Isolationsmaterial herstellbar. Alternativ sind die Elektroden 45, 46 mit jeweils einem Plättchen aus einem Isolator bedeckt. Hierzu sind insbesondere Glas- oder Keramikplättchen geeignet. Ebenfalls gut als Isolationsmaterial für die piezoelektrische Einheit 41 geeignet sind hochgefüllte Klebstoffe mit Korundpartikeln oder Glasperlen. Eine vorteilhafte Zusammensetzung liegt bei 30-60 Volumenprozent Epoxidharz und 70-40 Volumenprozent Korundpulver oder Glasperlen.

Die in Fig. 4a und Fig. 4b dargestellten piezoelektrischen Einheiten 41 sind Poka-Yoke-fähig. Eine fehlerhafte Kontaktierung durch Vertauschen der Anschlussdrähte ist ebenso ausgeschlossen wie eine fehlerhafte Einbaulage in dem Hohlraum 3, 31. Dies bringt einen großen Vorteil bei der Fertigung der erfindungsgemäßen Messgeräte mit sich. Ein sich bei allen dargestellten Ausgestaltungen ergebender weiterer Vorteil bei der Fertigung besteht darin, dass die piezoelektrische Einheit 41 nicht in einer exakten Position ausgerichtet und an einem anderen Bauteil der schwingfähigen Einheit 2 befestigt werden muss. Stattdessen kann die piezoelektrische Einheit 41 einfach in dem Hohlraum 3, 31 vergossen bzw. verklebt werden. Die piezoelektrische Einheit 41 kann vorgefertigt und mit Anschlussleitungen bestückt werden, sodass nur das fertige Bauteil zu montieren ist, was Zeit und Aufwand spart.

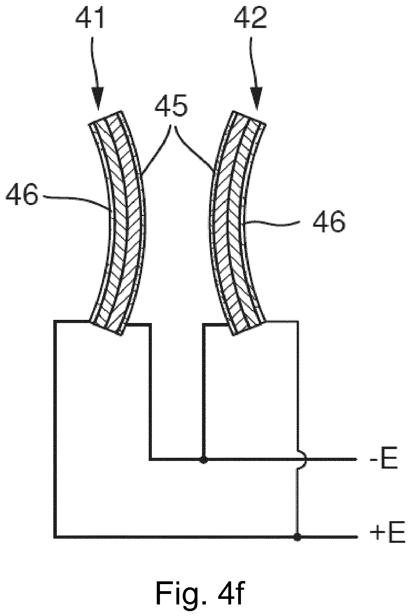

In Fig. 4f sind zwei piezoelektrische Einheiten 41, 42 gemäß Fig. 4a während der Beaufschlagung mit einer Wechselspannung dargestellt. Die Anordnung der piezoelektrischen Einheiten 41, 42 entspricht dem montierten Zustand in einer schwingfähigen Einheit 2 nach Fig. 2, d.h. einer in den ersten Hohlraum 31 eingebrachten ersten piezoelektrischen Einheit 41 und einer in den zweiten Hohlraum 32 eingebrachten zweiten piezoelektrischen Einheit 42.

Die einander zugewandten Elektroden 45 der beiden piezoelektrischen Einheiten 41, 42 sind mit dem gleichen Potential -E verbunden. Die beiden äußeren Elektroden 46 sind mit dem gleichen Potential +E verbunden. Alternativ sind die äußeren Elektroden 46 oder die inneren Elektroden 45 mit Masse und die jeweils anderen Elektroden mit dem Potential +/- E verbindbar. Die erste piezoelektrische Einheit 41 und die zweite piezoelektrische Einheit 42 sind bei der dargestellten Beaufschlagung beide nach innen gekrümmt, d.h. der geringste Abstand der beiden piezoelektrischen Einheiten 41, 42 befindet sich zwischen deren Mittelpunkten. Bei einer entgegengesetzten Beaufschlagung, bei welcher die inneren einander zugewandten Elektroden 45 mit dem positiven Potential und die beiden äußeren Elektroden 46 mit dem negativen Potential verbunden sind, sind die beiden piezoelektrischen Einheiten 41, 42 entsprechend in die andere Richtung gekrümmt.

Sind die piezoelektrischen Einheiten 41, 42 in den Hohlräumen 31, 32 im Wurzelbereich der stabförmigen Elemente 21, 22 platziert und mit einer elektrischen Wechselspannung beaufschlagt, wird die schwingfähige Einheit 2 zu Schwingungen in der Grundmode angeregt. Mit anderen Worten führen die stabförmigen Elemente 21, 22 Schwingungen in entgegengesetzter Richtung aus.

Ein großer Vorteil dieser Anordnung und Ausgestaltung der Antriebs-/Empfangseinheit 4 besteht in der Unempfindlichkeit gegenüber Schwingungen in unsymmetrischen Moden, die in der Anwendung durch Fremdvibrationen entstehen können. Diese werden von den piezoelektrischen Einheiten 21, 22 nicht detektiert, d.h. Auslenkungen der stabförmigen Elemente 21, 22 in axialer oder parallel zu der senkrecht zu der Schwingungsrichtung verlaufender Richtung, sowie asymmetrische Auslenkungen in Schwingungsrichtung erzeugen kein Spannungssignal in den piezoelektrischen Elementen 43, 44 der piezoelektrischen Einheiten 41, 42. Die Messsicherheit des Messgeräts 1 unter Fremdvibrationen ist daher sehr hoch. Selbiges gilt auch für die Verwendung zweier piezoelektrischer Einheiten 41, 42 nach einer der anderen dargestellten Ausgestaltungen.

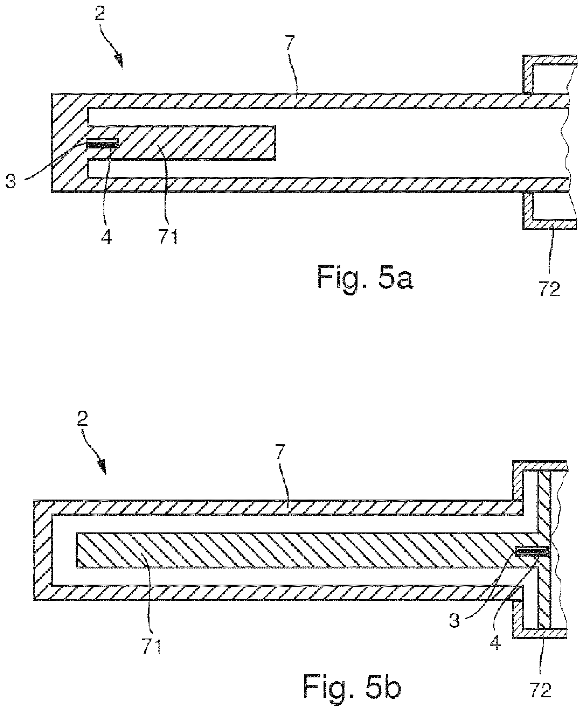

In Fig. 5a und Fig. 5b sind zwei unterschiedliche Ausgestaltungen eines Messgeräts mit einer schwingfähigen Einheit 2 in Form eines Stabes im Querschnitt dargestellt. Derartige Messgeräte, auch Einstab genannt, finden häufig bei der Füllstandsmessung von Schüttgütern Anwendung und werden von der Anmelderin unter dem Namen Soliphant hergestellt und vertrieben. Ein vorteilhaft ausgestalteter Einstab ist beispielsweise in der Offenlegungsschrift WO 2004/094964 A1 (bzw. US 2007/028691 A1) beschrieben. Ein weiterer Einstab ist in US 5 670 709 A offenbart.

Die schwingfähige Einheit 2 besteht aus einem rohrförmigen Hohlkörper 7 und einer stabförmigen Innenmasse 71. Die Innenmasse 71 kann jedoch auch in einer anderen Form als der eines massiven Stabes ausgeformt sein. Ein Ende des Hohlkörpers 7 ist mit einem Prozessanschluss 72 verbunden, während das andere Ende dem Prozess zugewandt ist. Der Hohlkörper 7 und die Innenmasse 71 schwingen in entgegengesetzte Richtungen. Innenmasse 71 und Hohlkörper 7 sind derart dimensioniert und aufeinander abgestimmt, dass zu jeder durch die Schwingungen auftretenden Kraft eine entsprechende Gegenkraft wirkt, sodass im Wesentlichen keine Kräfte auf die Einspannung wirken und das Schwingsystem entkoppelt ist. In der in Fig. 5a dargestellten Ausführungsform ist die Innenmasse 71 in dem prozesszugewandten Endbereich des Hohlkörpers 7 mit dem Hohlkörper 7 verbunden.

Vorzugsweise ist der prozesszugewandte Endbereich des Hohlkörpers 7 mit einer Kappe verschlossen, an welcher die Innenmasse 71 beispielsweise mittels einer Schraubverbindung befestigt ist. Die Antriebs-/Empfangseinheit 4 zur Anregung der schwingfähigen Einheit 2 zu Biegeschwingungen und zum Empfangen der mechanischen Schwingungen der schwingfähigen Einheit 2 ist in einen Hohlraum 3 eingebracht, welcher sich in der Innenmasse 71 befindet. Der Hohlraum 3 ist nahe des Befestigungsbereichs der Innenmasse 71 an dem Hohlkörper 7 angeordnet. Beispielsweise ist der Hohlraum 3 als Schlitz ausgestaltet und nur geringfügig größer als die in ihm befindliche Antriebs-/Empfangseinheit 4; dies insbesondere für den Fall, dass die schwingfähige Einheit 2 aus einem Metall gefertigt ist. Die elektrischen Leitungen zur Kontaktierung der Antriebs-/Empfangseinheit 4 sind durch den Hohlkörper 7 und den Prozessanschluss 72 zu einer hier nicht dargestellten Elektronikeinheit führbar, welche vorzugsweise in einem ebenfalls nicht dargestellten Gehäuse angeordnet ist. Das Gehäuse ist auf der dem Prozess abgewandten Seite an dem Prozessanschluss 72 befestigbar.

Fig. 5b zeigt eine alternative Ausführungsform eines Einstabs, wobei die stabförmige Innenmasse 71 und der rohrförmige Hohlkörper 7 in einem dem Prozess abgewandten Endbereich des Hohlkörpers 7 miteinander verbunden sind. Hierbei ist die Innenmasse 71 an einer Membran befestigt, welche in dem Prozessanschluss 72 eingespannt ist. Der Hohlkörper 7 steht mit dem Prozessanschluss 72 ebenfalls in fester Verbindung, beispielsweise über eine Schweiß- oder Schraubverbindung. Der Hohlraum 3, in welchen die Antriebs-/Empfangseinheit 4 eingebracht ist, befindet sich nahe der Membran in der Innenmasse 71.

Bei der Antriebs-/Empfangseinheit 4 handelt es sich in beiden Ausgestaltungen vorzugsweise um einen Bimorphpiezo, d.h. um eine piezoelektrische Einheit 41, wie sie in Fig. 4a oder Fig. 4c gezeigt und beschrieben ist, oder um einen unimorphen Piezo, wie in Fig. 4d oder Fig. 4e dargestellt. Für den Fall, dass die Innenmasse 71 metallisch ist, ist die Antriebs-/Empfangseinheit 4 vorzugsweise vollständig oder zumindest im Bereich der Elektroden mit einem isolierenden Werkstoff beschichtet. Bei dem Vergussmaterial, mit welchem der Hohlraum 3 zur Fixierung der Antriebs-/Empfangseinheit 4 und zur Herstellung einer kraftschlüssigen Verbindung mit der Wandung des Hohlraums 3 vergossen ist, handelt es sich vorzugsweise um einen harten Klebstoff. An dieser Stelle sei auf die Absätze zu Fig. 2 bezüglich der Materialien der schwingfähigen Einheit 2 und des Vergussmaterials verwiesen. Die dort im Zusammenhang mit Schwinggabeln getätigten Aussagen gelten analog für Einstäbe.

### Bezugszeichenliste

- 1: Messgerät
- 10: Gehäuse
- 11: Medium
- 12: Behälter
- 2: Schwingfähige Einheit
- 21: Erstes stabförmiges Element
- 22: Zweites stabförmiges Element
- 23: Basis
- 3: Hohlraum
- 31: Erster Hohlraum
- 32: Zweiter Hohlraum
- 4: Antriebs-/Empfangseinheit
- 41: Erste piezoelektrische Einheit
- 42: Zweite piezoelektrische Einheit
- 43: Erstes piezoelektrisches Element
- 44: Zweites piezoelektrisches Element
- 45: Erste Elektrode
- 46: Zweite Elektrode
- 47: Dritte Elektrode
- 48: Passives Element
- 5: Regel-/Auswerteeinheit
- 6: Leiterplatte
- 7: Hohlkörper
- 71: Innenmasse
- 72: Prozessanschluss

## Patentansprüche

1. Vorrichtung (1) zur Bestimmung und/oder Überwachung mindestens einer Prozessgröße eines Mediums (11) in einem Behälter (12), mit einer schwingfähigen Einheit (2) zum Einbringen in den Behälter (12), mit einem Gehäuse (10), wobei die schwingfähige Einheit (2) derart mit dem Gehäuse (10) verbunden ist, dass die schwingfähige Einheit (2) das Gehäuse (10) endseitig verschließt und wobei in die schwingfähige Einheit (2) mindestens ein Hohlraum (3) eingebracht ist, welcher von einem durch das Gehäuse (10) gebildeten Innenraum her zugänglich ist, mit einer Antriebs-/Empfangseinheit (4) zum Anregen der schwingfähigen Einheit (2) zu mechanischen Schwingungen und zum Empfangen der mechanischen Schwingungen und Umwandeln in ein elektrisches Empfangssignal, und mit einer Regel-/Auswerteeinheit (5) zur Regelung oder Steuerung der Schwingungsanregung und zur Auswertung des Empfangssignals in Bezug auf die Prozessgröße, wobei in dem Fall einer Schwinggabel die schwingfähige Einheit (2) ein erstes stab- oder paddelförmiges Element (21) und ein zweites stab- oder paddelförmiges Element (22) aufweist, welche über eine Basis (23) miteinander verbunden sind, wobei in einem basisnahen Wurzelbereich des ersten Elements (21) ein erster Hohlraum (31) und in einem basisnahen Wurzelbereich des zweiten Elements (22) ein zweiter Hohlraum (32) zur Aufnahme der Antriebs-/Empfangseinheit (4) eingebracht ist, wobei die Antriebs-/Empfangseinheit zwei piezoelektrische Einheiten (41,42) aufweist, wobei die zwei piezoelektrischen Einheiten (41,42) der Antriebs-/Empfangseinheit (4) in den ersten und zweiten Hohlraum (31,32) derart eingebracht sind und die beiden Hohlräume (31,32) derart mit einem Vergussmaterial gefüllt sind, dass die Antriebs-/Empfangseinheit (4) über das Vergussmaterial kraftschlüssig mit jeweils einer Wandung des ersten und zweiten Hohlraums (31,32) verbunden ist,
oder
wobei in dem Fall eines Einstabs die schwingfähige Einheit (2) als stabförmiger Hohlkörper (7) mit einer in einem Inneren des Hohlkörpers (7) an einer Wandung des Hohlkörpers (7) angeformten Innenmasse (71) ausgestaltet ist, wobei die Antriebs-/Empfangseinheit (4) eine piezoelektrische Einheit aufweist, wobei die Antriebs-/Empfangseinheit (4) in einen in die Innenmasse (7) eingebrachten dritten Hohlraum (3) eingebracht ist, wobei die Antriebs-/Empfangseinheit (4) derart in den dritten Hohlraum (3) eingebracht ist und der dritte Hohlraum (3) derart mit einem Vergussmaterial gefüllt ist, dass die Antriebs-/Empfangseinheit (4) über das Vergussmaterial kraftschlüssig mit einer Wandung des dritten Hohlraums (3) verbunden ist.

2. Vorrichtung nach Anspruch 1,
wobei die Antriebs-/Empfangseinheit (4) im Fall eines Einstabs eine oder im Fall einer Schwinggabel zwei piezoelektrische Einheiten (41, 42) in Form von Bimorphpiezos aufweist.

3. Vorrichtung nach Anspruch 2,
wobei die piezoelektrische Einheit (41, 42) ein erstes flächiges piezoelektrisches Element (43) und ein zweites flächiges piezoelektrisches Element (44) umfasst, welche mit jeweils einer Seitenfläche unter Ausbildung einer Kontaktfläche kraftschlüssig miteinander verbunden sind, und welche in senkrechter Richtung zu der Kontaktfläche polarisiert sind, wobei zumindest die jeweils der Kontaktfläche abgewandte Seitenfläche der piezoelektrischen Elemente (43, 44) mit einer Elektrode (45, 46) zur Beaufschlagung mit einem Anregungssignal und zum Abgreifen des Empfangssignals versehen ist.

4. Vorrichtung nach Anspruch 1,
wobei die Antriebs-/Empfangseinheit (4) im Fall eines Einstabs eine oder im Fall einer Schwinggabel zwei piezoelektrische Einheiten mit je einem piezoelektrischen Element (43) und je einem passiven Element (48) aufweist,
wobei das piezoelektrische Element (43) mit einem Anregungssignal beaufschlagbar ist, und wobei das piezoelektrische Element (43) mit dem passiven Element (48) derart mechanisch verbunden ist, dass die Beaufschlagung des piezoelektrischen Elements (43) mit dem Anregungssignal zu Biegeverformungen der piezoelektrischen Einheit führt.

5. Vorrichtung nach einem der vorangehenden Ansprüche,
wobei zumindest die schwingfähige Einheit (2) aus einem Kunststoff oder aus einem Kompositwerkstoff aus Kunststoff und Glasfasern, Glasperlen, Kohlefasern und/oder Keramikpulver gefertigt ist.

6. Vorrichtung nach einem der Ansprüche 1-4,
wobei zumindest die schwingfähige Einheit (2) aus einem Metall oder einer Metalllegierung, einer Keramik, einem Glas oder einem Kompositwerkstoff aus Keramik und Glas oder Keramik und Metall gefertigt ist.

7. Vorrichtung nach einem der vorangehenden Ansprüche,
wobei zumindest für den Fall, dass die schwingfähige Einheit (2) aus einem elektrisch leitfähigen Material besteht, mindestens eine Abdeckung oder Beschichtung aus einem elektrisch isolierenden Werkstoff auf die Antriebs-/Empfangseinheit (4) aufgebracht ist.

8. Vorrichtung nach einem der vorangehenden Ansprüche,
wobei die Steifigkeit des Vergussmaterials, mit welchem der erste, zweite oder dritte Hohlraum (3,31,32) gefüllt ist, im Wesentlichen der Steifigkeit des Materials der schwingfähigen Einheit (2) entspricht.

9. Vorrichtung nach mindestens einem der Ansprüche 7 und 8,
wobei das Vergussmaterial, mit welchem der erste, zweite oder dritte Hohlraum (3,31,32) gefüllt und/oder der Werkstoff, mit welchem die Antriebs-/Empfangseinheit (4) beschichtet ist, im Wesentlichen aus Epoxydharz, aus Epoxydharz und Korundpulver, Keramikpulver oder Sand, oder aus Epoxydharz und Glasperlen oder Glasfasern besteht.

10. Vorrichtung nach einem der vorangehenden Ansprüche,
wobei im Fall einer Schwinggabel zwei piezoelektrische Einheiten (41, 42) auf einer Platte(6), insbesondere einer Leiterplatte, aufgebracht sind, wobei die Platte (6) derart ausgestaltet und die piezoelektrischen Einheiten (41, 42) derart auf der Platte (6) angeordnet sind, dass die piezoelektrischen Einheiten (41, 42) in den ersten und zweiten Hohlraum (31, 32) einbringbar sind.

11. Vorrichtung nach Anspruch 1 oder 10,
wobei im Fall einer Schwinggabel die Regel-/Auswerteeinheit die Antriebs-/Empfangseinheit (4) derart mit einem Anregungssignal beaufschlagt, dass die stab- oder paddelförmigen Elemente Biegeschwingungen in entgegengesetzte Richtungen durchführen.

12. Vorrichtung nach Anspruch 1,
wobei im Fall eines Einstabs die Innenmasse (71) stabförmig ist, wobei der dritte Hohlraum (3) mit der Antriebs-/Empfangseinheit (4) derart angeordnet ist, dass die Innenmasse (71) und der Hohlkörper (7) Biegeschwingungen in entgegengesetzter Richtung durchführen.

## Claims

1. Apparatus (1) designed to determine and/or monitor at least one process variable of a medium (11) in a vessel (12), with a unit capable of vibrating (2) designed to be introduced into the vessel (12), with a housing (10), wherein the unit capable of vibrating (2) is connected to the housing (10) in such a way that the unit capable of vibrating (2) seals the housing (10) at an end and wherein at least a cavity (3) is implemented in the unit capable of vibrating (2), said cavity being accessible from an interior area formed by the housing (10), with a drive/reception unit (4) designed to excite the unit capable of vibrating (2) to produce mechanical vibrations and designed to receive the mechanical vibrations and convert them into an electrical reception signal, and with a control/evaluation unit (5) designed to regulate or control the excitation of vibrations and designed to evaluate the reception signal in relation to the process variable,
wherein in the case of a tuning fork, the unit capable of vibrating (2) has a first element in the form of a rod or paddle (21) and a second element in the form of a rod or paddle (22), which are interconnected via a base (23), wherein a first cavity (31) is implemented in a root zone, close to the base, of the first element (21), and a second cavity (32) is implemented in a root zone, close to the base, of the second element (22), for the purpose of accommodating the drive/reception unit (4), wherein the drive/reception unit (4) has two piezoelectric units (41, 42), wherein the two piezoelectric units (41, 42) of the drive/reception unit (4) are introduced into the first and second cavity (31, 32) in such a way that the two cavities (31, 32) are filled with a potting material in such a way that the drive/reception unit (4) is connected via the potting material with a wall of the first and of the second cavity (31, 32) in a friction-locking manner,
or
wherein in the case of a single rod, the unit capable of vibrating (2) is designed as a rod-shaped hollow body (7) with an inner mass (71) formed in an interior of the hollow body (7) on a wall of the hollow body (7), wherein the drive/reception unit (4) has a piezoelectric unit, wherein the drive/reception unit (4) is introduced into a third cavity (3) implemented in the inner mass (7), wherein the drive/reception unit (4) is introduced in the third cavity (3) in such a way and the third cavity (3) is filled with a potting material in such a way that the drive/reception unit (4) is connected via the potting material with a wall of the third cavity (3) in a friction-locking manner.

2. Apparatus as claimed in Claim 1,
wherein, in the case of a single rod, the drive/reception unit (4) has one piezoelectric unit and, in the case of a tuning fork, the drive/reception unit (4) has two piezoelectric units (41, 42) in the form of bimorph piezoelectric elements.

3. Apparatus as claimed in Claim 2,
wherein the piezoelectric unit (41, 42) comprises a first flat piezoelectric element (43) and a second flat piezoelectric element (44), wherein said elements are interconnected with a side surface in each case via a friction-locking connection forming a contact surface, and wherein said elements are polarized in the perpendicular direction to the contact surface, wherein at least the side surface of the piezoelectric elements (43, 44) - facing away from the contact surface in each case - is provided with an electrode (45, 46) for the purpose of supplying with an excitation signal and measuring the reception signal.

4. Apparatus as claimed in Claim 1,
wherein, in the case of a single rod, the drive/reception unit (4) has one piezoelectric unit or, in the case of a tuning fork, the drive/reception unit has two piezoelectric units each with one piezoelectric element (43) and one passive element (48), wherein the piezoelectric element (43) can be subjected to an excitation signal, and wherein the piezoelectric element (43) is mechanically connected to the passive element (48) in such a way that subjecting the piezoelectric element (43) to the excitation signal causes flexural deformations of the piezoelectric unit.

5. Apparatus as claimed in one of the previous claims,
wherein at least the unit capable of vibrating (2) is made from a plastic or from a composite material made from plastic and glass fibers, glass beads, carbon fibers and/or ceramic powder.

6. Apparatus as claimed in one of the Claims 1 to 4,
wherein at least the unit capable of vibrating (2) is made from a metal or a metal alloy, a ceramic, a glass or a composite material made from ceramic and glass, or ceramic and metal.

7. Apparatus as claimed in one of the previous claims,
wherein at least in the case that the unit capable of vibrating (2) is made from an electrically conductive material, at least one cover or layer of an electrically isolating material is applied on the drive/reception unit (4).

8. Apparatus as claimed in one of the previous claims,
wherein the rigidity of the potting material with which the first, the second or the third cavity (3, 31, 32) is filled essentially corresponds to the rigidity of the material of the unit capable of vibrating (2).

9. Apparatus as claimed in at least in one of the Claims 7 and 8,
wherein the potting material with which the first, the second or the third cavity (3, 31, 32) is filled and/or the material with which the drive/reception unit (4) is coated is essentially made from epoxy resin, epoxy resin and corundum powder, ceramic powder or sand, or from epoxy resin and glass beads or glass fibers.

10. Apparatus as claimed in one of the previous claims,
wherein, in the case of a tuning fork, two piezoelectric units (41, 42) are installed on a board (6), particularly a printed circuit board, wherein the board (6) is designed in such a way and the piezoelectric units (41, 42) are arranged on the board (6) in such a way that the piezoelectric units (41, 42) can be introduced into the first and the second cavity (31, 32).

11. Apparatus as claimed in Claim 1 or 10,
wherein, in the case of a tuning fork, the control/evaluation unit subjects the drive/reception unit (4) to an excitation signal in such a way that the rod- or paddle-shaped elements perform flexural vibrations in opposite directions.

12. Apparatus as claimed in Claim 1,
wherein, in the case of a single rod, the inner mass (71) is rod-shaped, wherein the third cavity (3) with the drive/reception unit is arranged in such a way that the inner mass (71) and the cavity (7) perform flexural vibrations in the opposite direction.

## Revendications

1. Dispositif (1) destiné à la détermination et/ou la surveillance d'au moins une grandeur process d'un produit (11) dans un réservoir (12), avec une unité apte à vibrer (2) destinée à être introduite dans le réservoir (12), avec un boîtier (10, l'unité apte à vibrer (2) étant reliée avec le boîtier (10) de telle sorte que l'unité apte à vibrer (2) ferme le boîtier (10) en son extrémité et au moins une cavité (3) étant réalisée dans l'unité apte à vibrer (2), laquelle cavité est accessible par un espace intérieur formé par le boîtier (10), avec une unité d'entraînement / de réception (4) destinée à exciter l'unité apte à vibrer (2) en vibrations mécaniques et destinée à la réception des vibrations mécaniques et à la conversion en un signal de réception électrique, et avec une unité de régulation / d'exploitation (5) destinée à la régulation ou à la commande de l'excitation en vibrations et destinée à l'exploitation du signal de réception par rapport à la grandeur de process,
dispositif pour lequel, dans le cas d'une fourche vibrante, l'unité apte à vibrer (2) présente un premier élément en forme de tige ou d'ailette (21) et un deuxième élément en forme de tige ou d'ailette (22), lesquels sont reliés entre eux par l'intermédiaire d'une base (23), une première cavité (31) étant réalisée dans une zone racinaire, proche de la base, du premier élément (21), et une deuxième cavité (32) étant réalisée dans une zone racinaire, proche de la base, du deuxième élément (22), destinées à la réception de l'unité d'entraînement / de réception (4), l'unité d'entraînement / de réception (4) comportant deux unités piézoélectriques (41, 42), les deux unités piézoélectriques (41, 42) de l'unité d'entraînement / de réception (4) étant introduites dans la première et la deuxième cavité (31, 32), et les deux cavités (31, 32) étant remplies avec un matériau de surmoulage, de telle sorte que l'unité d'entraînement / de réception (4) est reliée par friction à travers le matériau de surmoulage avec respectivement une paroi de la première et de la deuxième cavité (31, 32),
ou
dispositif pour lequel, dans le cas d'une monotige, l'unité apte à vibrer (2) est conçue en tant que corps creux (7) en forme de tige avec une masse intérieure (71) formée dans un intérieur du corps creux (7) sur une paroi du corps creux (7), l'unité d'entraînement / d'exploitation (4) comportant une unité piézoélectrique, l'unité d'entraînement / d'exploitation (4) étant introduite dans une troisième cavité (3) réalisée dans la masse intérieure (7), l'unité d'entraînement / d'exploitation (4) étant introduite dans la troisième cavité (3) et la troisième cavité (3) étant remplie d'un matériau de surmoulage, de telle sorte que l'unité d'entraînement / d'exploitation (4) est reliée par friction à travers le matériau de surmoulage avec une paroi de la troisième cavité (3).

2. Dispositif selon la revendication 1,
pour lequel l'unité d'entraînement / de réception (4) présente, dans le cas d'une monotige ou dans le cas d'une fourche vibrante, deux unités piézoélectriques (41, 42) sous la forme d'éléments piézoélectriques bimorphes.

3. Dispositif selon la revendication 2,
pour lequel l'unité piézoélectrique (41, 42) comprend un premier élément piézoélectrique plat (43) et un deuxième élément piézoélectrique plat (44), lesquels éléments sont reliés entre eux, au moyen d'une liaison par friction, avec respectivement une surface latérale en formant une surface de contact, et lesquels éléments sont polarisés selon une direction perpendiculaire à la surface de contact, la surface latérale - située à l'opposé de la surface de contact respective - des éléments piézoélectriques (43, 44) étant munie d'une électrode (45, 46) en vue de l'alimentation d'un signal d'excitation et du prélèvement du signal de réception.

4. Dispositif selon la revendication 1,
pour lequel l'unité d'entraînement / d'exploitation (4) présente, dans le cas d'une monotige, un, ou dans le cas d'une fourche vibrante, deux unités piézoélectriques avec respectivement un élément piézoélectrique (43) et respectivement un élément passif (48), l'élément piézoélectrique (43) pouvant être alimenté par un signal d'excitation, et l'élément piézoélectrique (43) étant relié mécaniquement avec l'élément passif (48) de telle sorte que l'alimentation de l'élément piézoélectrique (43) avec le signal d'excitation entraîne des déformations de flexion de l'unité piézoélectrique.

5. Dispositif selon l'une des revendications précédentes,
pour lequel au moins l'unité apte à vibrer (2) est fabriquée en un plastique ou en un matériau composite constitué de plastique et de fibres de verre, de billes de verre, de fibres de carbone et/ou de poudre de céramique.

6. Dispositif selon l'une des revendications 1 à 4,
pour lequel au moins l'unité apte à vibrer (2) est fabriquée en un métal ou un alliage métallique, une céramique, un verre ou un matériau composite en céramique et verre, ou céramique et métal.

7. Dispositif selon l'une des revendications précédentes,
pour lequel, dans le cas où l'unité apte à vibrer (2) est constituée d'un matériau électriquement conducteur, au moins un recouvrement ou un revêtement constitué d'un matériau électriquement conducteur est appliqué sur l'unité d'entraînement / d'exploitation (4).

8. Dispositif selon l'une des revendications précédentes,
pour lequel la rigidité du matériau de surmoulage, avec lequel la première, la deuxième ou la troisième cavité (3, 31, 32) est remplie, correspond pour l'essentiel à la rigidité du matériau de l'unité apte à vibrer (2).

9. Dispositif selon au moins l'une des revendications 7 et 8,
pour lequel le matériau de surmoulage, avec lequel la première, la deuxième ou la troisième cavité (3, 31, 32) sont remplies et/ou le matériau, avec lequel l'unité d'entraînement / d'exploitation (4) est revêtue, est constitué pour l'essentiel de résine époxy, de résine époxy et de poudre de corindon, de poudre de céramique ou de sable, ou de résine époxy et de billes de verre ou de fibres de verre.

10. Dispositif selon l'une des revendications précédentes,
pour lequel, dans le cas d'une fourche vibrante, deux unités piézoélectriques (41, 42) sont installées sur une platine (6), notamment une platine de circuit imprimé, la platine (6) étant conçue et les unités piézoélectriques (41, 42) étant disposées sur la platine (6) de telle sorte que les unités piézoélectriques (41, 42) puissent être introduites dans la première et la deuxième cavité (31, 32).

11. Dispositif selon la revendication 1 ou 10,
pour lequel, dans le cas de lames vibrantes, l'unité de régulation / d'exploitation alimente l'unité d'entraînement / de réception (4) avec un signal d'excitation de telle sorte que les éléments en forme de tige et d'ailette exécutent des vibrations de flexion en directions opposées.

12. Dispositif selon la revendication 1,
pour lequel, dans le cas d'une monotige, la masse intérieure (71) est en forme de tige, la troisième cavité (3) avec l'unité d'entraînement / de réception étant disposée de telle sorte que la masse intérieure (71) et la cavité (7) exécutent des vibrations de flexion en directions opposées.
